(19) Europäisches Patentamt

European Patent Office

Office européen des brevets

(11) **EP 0 829 401 B1**

(12) **EUROPÄISCHE PATENTSCHRIFT**

(45) Veröffentlichungstag und Bekanntmachung des Hinweises auf die Patenterteilung:
**13.03.2002   Patentblatt 2002/11**

(51) Int Cl.⁷: **B60T 8/00**

(21) Anmeldenummer: **97114260.9**

(22) Anmeldetag: **19.08.1997**

(54) **Verfahren und Vorrichtung zur Regelung des querdynamischen Verhaltens eines Kraftfahrzeugs**

Procedure and device for controlling the lateral dynamic attitude of a vehicle

Procédé et dispositif pour régler le comportement dynamique transversal d'un véhicule

(84) Benannte Vertragsstaaten:
**DE ES FR GB IT PT**

(30) Priorität: **13.09.1996   DE 19637346**

(43) Veröffentlichungstag der Anmeldung:
**18.03.1998   Patentblatt 1998/12**

(73) Patentinhaber: **Volkswagen Aktiengesellschaft
38436 Wolfsburg (DE)**

(72) Erfinder:
• **Witte, Bastian, Dr.
38179 Gross Schwülper (DE)**
• **Schulze, Bernd-Guido, Dr.
38442 Wolfsburg (DE)**

(56) Entgegenhaltungen:
**DE-A- 4 435 448          US-A- 5 371 677**

**Beschreibung**

Die Erfindung bezieht sich auf ein Verfahren und eine Vorrichtung zur Regelung des querdynamischen Verhaltens eines Kraftfahrzeugs gemäß den Oberbegriffen der Ansprüche 1 bzw. 21.

Derartige Verfahren sind als Fahrdynamikregelungen (FDR) bzw. Fahrstabilitätsregelungen (FSR) bekannt. Während Antiblockiersysteme (ABS) und Antriebsschlupfregelungen (ASR) die Stabilität des Fahrzeugs in längsdynamisch kritischen Situationen, d. h. bei Brems- und Beschleunigungsvorgängen, gewährleisten sollen, dienen Fahrdynamikregelungen dazu, die Fahrstabilität bei querdynamisch kritischen Situationen, insbesondere bei einem Lenkradeinschlag des Fahrers, zu gewährleisten.

Die DE 44 19 650 A1 beschreibt ein Verfahren zum Erkennen eines querdynamisch kritischen Fahrzustands, bei dem der Lenkradwinkel und die Fahrgeschwindigkeit gemessen werden und ein Toleranzband für einen dritten Parameter, beispielsweise die Querbeschleunigung oder die Giergeschwindigkeit gebildet wird. Dieser dritte Parameter wird zusätzlich gemessen und mit dem Toleranzband verglichen. Der Toleranzbereich umfaßt dabei einen dynamischen und einen darauffolgenden stationären Bereich. In dem dynamischen Abschnitt werden verschiedene Fahrzeugzustände, wie beispielsweise die Beladung des Fahrzeugs, eine unterschiedliche Bereifung wie z. B. Sommerreifen, Winterreifen und unterschiedlicher Reifendruck sowie die Elastizität der Radaufhängung und Lenkung berücksichtigt.

Ein derartiges Verfahren ist jedoch lediglich auf das Erkennen eines möglicherweise kritischen oder regelungsbedürftigen Fahrzustandes beschränkt, so daß eine Fahrdynamikregelung nicht bereits bei innerhalb des ermittelten Toleranzbereichs liegenden etwas unstabilen Fahrzustanden erkannt und geregelt wird.

in der DE 195 03 148 A1 wird eine Vorrichtung zur Steuerung des dynamischen Verhaltens eines Kraftfahrzeugs beschrieben, bei der ein Schwimmwinkel und dessen Winkelgeschwindigkeit erfaßt werden, um zu ermitteln, ob ein durch diese Größen beschriebener dynamischer Zustand des Fahrzeugs in einem stabilen oder instabilen Bereich liegt. Zur Korrektur des instabilen Verhaltens wird für jedes Vorder- und Hinterrad des Fahrzeugs eine jeweilige Sollbremskraft berechnet. Eine Grenzlinie der stabilen und instabilen Bereiche wird festgelegt in Übereinstimmung mit Fahrzustandsgrößen des Fahrzeugs, z. B. der Fahrzeuggeschwindigkeit, dem Lenkwinkel, der Lenkwinkelgeschwindigkeit sowie dem Reibungsbeiwert der Fahrbahnoberfläche. Weiterhin sind Sensoren zur Erfassung einer Längsgeschwindigkeit, einer Quergeschwindigkeit, einer Längsbeschleunigung, einer Querbeschleunigung, einer Gierrate und eines Lenkwinkels der Vorderrräder vorgesehen. Aus den gemessenen Daten kann der Reibungsbeiwert der Fahrbahnoberfläche auf verschiedene Weise bestimmt werden.

Eine derartige Vorrichtung trägt zwar der unterschiedlichen Haftung der Reifen auf der jeweiligen Fahrbahnoberfläche Rechnung. Allerdings müssen zur genauen Bestimmung insbesondere des Reibungsbeiwerts der Fahrbahnoberfläche in aufwendiger Weise mehrere Meßgrößen bestimmt werden, wobei eine plötzliche Änderung der Fahrbahnoberfläche während der Fahrt erst mit einer entsprechenden zeitlichen Verzögerung festgestellt und in den Rechnungen berücksichtigt werden kann.

Der Erfindung liegt die Aufgabe zugrunde, ein Verfahren und eine Vorrichtung zur Regelung des querdynamischen Verhaltens eines Kraftfahrzeugs zu schaffen, das eine gute und sichere Regelung des querdynamischen Verhaltens des Fahrzeugs gewährleistet, die den jeweiligen Haftverhältnissen des Reifens auf der Straße Rechnung trägt.

Diese Aufgabe wird durch ein Verfahren nach Anspruch 1 sowie eine Vorrichtung nach Anspruch 21 gelöst. Die Unteransprüche beschreiben bevorzugte Weiterbildungen des erfindungsgemäßen Verfahrens und der erfindungsgemäßen Vorrichtung.

Der Erfindung liegt der Gedanke zugrunde, eine gute Haftwertausnutzung in Fahrzeug-Querrichtung zu erreichen, indem ein Reifenmodell benutzt wird, bei dem die relative Haftwertausnutzung in Fahrzeug-Querrichtung zu der relativen Haftwertausnutzung in Fahrzeug-Längsrichtung in Bezug gesetzt wird und diese anschließend geändert wird, bis ein Sollwert der Haftwertausnutzung in Fahrzeug-Querrichtung erreicht wird. Dazu wird eine aus Meßwerten bestimmte Querbeschleunigung des Fahrzeugs mit einem vom Fahrer gewünschten Sollwert der Querbeschleunigung verglichen. Das Verhältnis des bestimmten Sollwertes zum Istwert der Fahrzeug-Querbeschleunigung wird als Korrekturfaktor genommen, um den eine relative Haftwertausnutzung in Fahrzeug-Querrichtung erhöht werden muß, um eine sichere Kurvenfahrt mit kleinem Kurvenradius zu gewährleisten.

Das die verschiedenen Reifenzustände beschreibende Reifenmodell kann dabei insbesondere nach Anspruch 2 durch den Schlupf und einen Schräglaufwinkel des betreffenden Reifens parametrisiert werden, wobei diese Größen aus der gemessenen Raddrehzahl und der Querbeschleunigung des Fahrzeugs bestimmt werden können. Die vom Fahrer gewünschte Soll-Querbeschleunigung des Fahrzeugs kann nach Anspruch 5 aus der gemessenen Fahrgeschwindigkeit des Fahrzeugs und dem Lenkradwinkel des Fahrzeugs bestimmt werden. Somit kann nach den Ansprüchen 2 bis 5 durch Verwendung einfacher Sensoren aus den Raddrehzahlen, der Fahrgeschwindigkeit, dem Lenkradwinkel und der gemessenen Querbeschleunigung des Fahrzeugs auf einfache Weise die Lage des Fahrzeugs im Reifenmodell-Diagramm bestimmt und ein Regelungsbedarf ermittelt werden.

Die Regelung kann dabei alternativ nach den Ansprüchen 6 oder 7 durch Betätigung der Radbremsen oder eines Leistungsstellglieds im Motors, z. B. der Drosselklappe des Motors, erreicht werden. Somit wird die gewünschte relative Haftwertausnutzung in Fahrzeug-Querrichtung erreicht, indem die entsprechende, aus dem Reifenmodell ermittelte relative Haftwertausnutzung in X-Richtung auf bekannte Weise, wie es bei einer Schlupfregelung z. B. in einem Antiblockiersystem oder einer Antischlupfregelung erfolgt, verändert werden.

Die Erfindung wird im folgenden an einigen Ausführungsformen anhand der beiliegenden Zeichnungen näher erläutert. Es zeigen:

Figur 1    ein Flußdiagramm einer Ausführungsform der Erfindung;

Figur 2    ein Diagramm eines Reifenmodells gemäß dieser Ausführungsform.

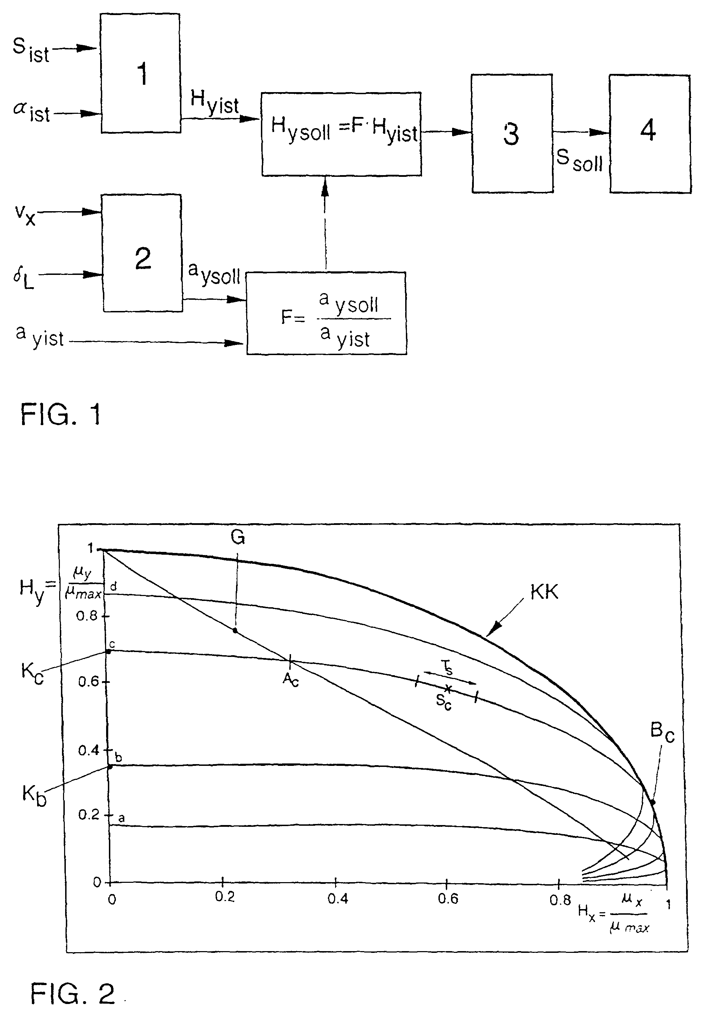

Ein Fahrzeug ist mit den Raddrehzahlsensoren eines ABS (Antiblockiersystems) zumindest der angetriebenen Achse, möglichst aber von allen vier Rädern, und einem Lenkradwinkelsensor versehen, deren Ausgangswerte gemäß Figur 1 für das erfindungsgemäße Verfahren verwendet werden. Weiterhin werden die ermittelte Fahrgeschwindigkeit des Fahrzeugs, die auch für die Geschwindigkeitsanzeige genutzt wird, und die Querbeschleunigung des Fahrzeugs als Eingangsdaten für das erfindungsgemäße Verfahren verwendet. Die Querbeschleunigung des Fahrzeugs kann dabei direkt über einen Querbeschleunigungssensor oder indirekt aus einer ermittelten Giergeschwindigkeit des Fahrzeugs bestimmt werden. Aus den vier Raddrehzahlen der Fahrzeugräder kann gemäß der DE 195 37 791 A1 die Längsgeschwindigkeit V des Fahrzeugschwerpunkts berechnet werden, wobei auch die Referenzgeschwindigkeit des ABS herangezogen werden kann, mit der die Raddrehzahlen zur Schlupfberechnung verglichen werden. Gemäß der bekannten Gleichung

$$\beta = \int_0^t \left[ \frac{\dot{y}}{v} - \dot{\psi} \right] dt$$

kann der Schwimmwinkel $\beta$ des Fahrzeugs bestimmt werden. Aus den Abmessungen des Fahrzeugs, dem Lenkwinkel $\delta_L$ und der Giergeschwindigkeit kann daraus für jedes Rad in allgemein bekannter Weise der Schlupf s und der Schräglaufwinkel $\alpha$ bestimmt werden, wobei für ein frontgetriebenes Fahrzeug die Berechnung für die Vorderachse ausreicht. Dabei kann aus der Längs- und der Querbeschleunigung auch die Radlastverteilung des Fahrzeugs näherungsweise bestimmt werden.

Vorteilhaft kann der Schräglaufwinkel an der Vorderachse auch aus folgender Formel berechnet werden:

$$\alpha_v = \delta_v - \dot{\psi} \cdot \left[ \frac{l}{v} - \frac{m \cdot v}{c_{\alpha h}} \cdot \frac{l_v}{l} \right]$$

oder

$$\alpha_v = \delta_v - \ddot{y} \cdot \left[ \frac{l}{v^2} - \frac{m}{c_{\alpha h}} \cdot \frac{l_v}{l} \right]$$

mit

$$c_{\alpha h} \approx 14{,}32 \cdot m \cdot \frac{l_v}{l} \cdot g$$

Insbesondere die obere Formel mit der Giergeschwindigkeit hat in der Simulation gute Ergebnisse gezeigt. Herleitung:
Aus Mitschke, "Dynamik der Kraftfahrzeuge Band C", S. 37 gilt:

$$\delta_v = \frac{l}{\rho} + (\alpha_v - \alpha_h)$$

dies ergibt:

$$\alpha_v = \delta_v - \frac{l}{\rho} + \alpha_h$$

mit:

$$\alpha_h = \frac{F_{yh}}{c_{\alpha h}} = \frac{m \cdot \ddot{y} \cdot \frac{lv}{l}}{c_{\alpha h}}$$

und

$$\ddot{y} = \frac{v^2}{\rho}$$

folgt:

$$\alpha_v = \delta_v - \ddot{y} \cdot \left[ \frac{l}{v^2} - \frac{m}{c_{\alpha h}} \cdot \frac{l_v}{l} \right]$$

stationär gilt: $\ddot{y} = \dot{\psi} \cdot v$
daraus ergibt sich:

$$\alpha_v = \delta_v - \dot{\psi} \cdot \left[ \frac{l}{v} - \frac{m \cdot v}{c_{\alpha h}} \cdot \frac{l_v}{l} \right]$$

Mit diesen Werten kann das aus der DE 44 35 448 A1 bekannte Reifenmodell benutzt werden. Es berechnet für jeden Reifen aus Schlupf s und Schräglaufwinkel $\alpha$ jeweils einen Istwert der Haftwertausnutzung ($H_{xist}$), d.h. des Verhältnisses des Fahrbahnreibwerts $\mu_x$ zum maximal möglichen Fahrbahnreibwert $\mu_{max}$ in Fahrzeug-Längsrichtung,

$$H_{xist} = \mu_x / \mu_{max}$$

und in Fahrzeug-Querrichtung y

$$H_{yist} = \mu_y / \mu_{max}$$

Die Werte der beiden Vorderräder werden proportional zu ihren Radlastanteilen addiert, da für die Gesamtquerbeschleunigung unerheblich ist, welche Beiträge von welchem Rad kommen:

$$\frac{\mu_x}{\mu_{max}}\bigg|_{VA} = \frac{AntFz_{vorne,innen} * \frac{\mu_x}{\mu_{max}}\bigg|_{vorne,innen} + AntFz_{vorne,außen} * \frac{\mu_x}{\mu_{max}}\bigg|_{vorne,außen}}{AntFz_{vorne,innen} + AntFz_{vorne,außen}}$$

$$\frac{\mu_y}{\mu_{max}}\bigg|_{VA} = \frac{AntFz_{vorne,innen} * \frac{\mu_y}{\mu_{max}}\bigg|_{vorne,innen} + AntFz_{vorne,außen} * \frac{\mu_y}{\mu_{max}}\bigg|_{vorne,außen}}{AntFz_{vorne,innen} + AntFz_{vorne,außen}}$$

Wenn beispielsweise die relative Haftwertausnutzung in Fahrzeug-Längsrichtung 80 % und in Fahrzeug-Querrichtung 40 % beträgt, ergibt sich durch die geometrische Addition der Gleichung (2), daß diese Achse zu insgesamt 89 % ausgenutzt ist. Zu diesem Ist-Zustand gehört beispielsweise eine Ist-Beschleunigung von 2 m/s$^2$.

Aus dem ermittelten Lenkradwinkel $\delta_L$ und der Fahrgeschwindigkeit v wird in einem zweiten Schritt der Sollwert der Fahrzeug-Querbeschleunigung ermittelt, d. h., die vom Fahrer tatsächlich gewünschte Querbeschleunigung. Diese Soll-Querbeschleunigung $a_{ysoll} = y_{soll}$ kann dabei direkt als Multiplikation der Sollgiergeschwindigkeit mit der Fahrgeschwindigkeit ermittelt werden, sie kann jedoch auch z. B. durch ein lineares Fahrzeugmodell oder über den stationären Endwert mittels einer charakteristischen Fahrgeschwindigkeit ($v_{ch}$) aus

$$\ddot{y}_{soll} = \frac{l}{i_l \cdot l} \cdot \frac{V^2}{l + \left(\frac{v}{v_{ch}}\right)^2} \cdot \delta_l$$

ermittelt werden. Da in der Fahrdynamikregelung in der Regel zwei Soll-Giergeschwindigkeitsgrenzen vorliegen (eine in Richtung des Über- und eine in Richtung des Untersteuerns), soll für Bildung der Soll-Querbeschleunigung diejenige herangezogen werden, die der IstQuerbeschleunigung am nächsten ist. Die Soll-Querbeschleunigung $Y_{soll}$ betrage für ein erstes Beispiel 4 m/s$^2$ und für ein zweites Beispiel 6 m/s$^2$.

Anschließend wird aus der Sollquerbeschleunigung $Y_{soll}$ und der Istquerbeschleunigung $y_{ist}$ ein Quotient gebildet, der einen Korrekturfaktor F wiedergibt. Für die beiden Beispiele beträgt dieser Faktor F1 = 4: 2 = 2, F2 = 6: 2 = 3. Anschließend wird ein Sollwert der Haftwertausnutzung $H_{ysoll}$ in y-Richtung ermittelt als Produkt aus dem Korrekturfaktor F und dem aus dem Reifenmodell ermittelten Istwert der Haftwertausnutzung $H_{yist}$.

Die Abweichung von $H_{yist}$ von $H_{ysoll}$ wird als Regelabweichung genommen. Die Regelung erfolgt dabei, entsprechend der Regelung eines Antiblockiersystems oder einer Antriebschlupfregelung, in Fahrzeug-Längsrichtung (X-Richtung), wobei in bekannter Weise alternativ durch Betätigen der Radbremsen und/oder durch eine Änderung eines Leistungstellgliedes des Motors, z. B. der Drosselklappe, der Schlupf verringert werden kann.

Figur 2 zeigt ein Reifenmodell, das eine Beziehung der Haftwertausnutzung in Fahrzeug-y-Richtung, $H_y$, zu der Haftwertausnutzung in Fahrzeug-x-Richtung, $H_x$, wiedergibt. Als Maximalwert dieser relativen Beträge kann jeweils der Wert 1 erreicht werden, wobei eine maximale Haftwertausnutzung in einer Richtung dann vorliegt, wenn die Haftwertausnutzung in der anderen Richtung den Wert 0 hat. Die in die jeweiligen Richtungen jeweils erreichbare maximale Haftwertausnutzung wird dabei durch eine Kurve KK (Kammscher Kreis) in Figur 2 wiedergegeben. Wird in X-Richtung und in Y-Richtung jeweils eine von 0 verschiedene Haftwertausnutzung erreicht, so ist gemäß der mit KK bezeichneten Kurve in Figur 2 auch in der anderen Richtung nur ein Wert kleiner als 1 möglich. Die mit a, b, c und d bezeichneten Kurven in dem Diagramm der Figur 2 stellen jeweils weitere Kurven in diesem Diagramm dar. Die Punkte einer Kurve beschreiben dabei jeweils Reifenzustände, die einen konstanten Schräglaufwinkel $\alpha$ haben, wobei die Kurven durch den Schlupf s parametrisiert werden. Bei der Ermittlung des Zustandes eines Reifens des Fahrzeugs in dem in Figur 2 gezeigten Diagramm des Reifenmodells können somit die Haftwertausnutzung in X- und Y-Richtung auf einfache Weise aus den Eingangsdaten des Schräglaufwinkels $\alpha$ und des Schlupfs s bestimmt werden, wenn eine vollständige Parametrisierung des von den Diagrammachsen und dem Kamschen Kreis KK umgebenen Flächenbereichs zur Verfügung steht.

Für das erste Beispiel ergibt sich somit eine Haftwertausnutzung in Fahrzeug-Querrichtung von 2 * 40 % = 80 %, für das zweite Beispiel 3 * 40 % = 120 %. Da das Reifenkennfeld als Ausnutzungsgradkennfeld vorliegt, ist auch

EP 0 829 401 B1

von vornherein bekannt, daß der maximal mögliche Ausnutzungsgrad in jedem Fall bei 100 % liegt, d. h. ein Ausnutzungsgrad von 120 % wie im zweiten Beispiel ist nicht realisierbar, daher muß dieser Soll-Querausnutzungsgrad auf 100 % begrenzt werden. Man gelangt damit zu einer einfachen, reibwertabhängigen Begrenzung, die im Gegensatz zur Fahrdynamikregelung keine zusätzliche Fahrbahnreibwerterfassung benötigt, aber bei allen Fahrbahnreibwerten funktioniert.

Die Regelung erfolgt in Reifenlängsrichtung, d.h. die Regelung kann nur auf der Kurve des aktuellen Schräglaufwinkels erfolgen, da über die Bremse oder den Drosselklappenwinkel nur der Schlupf, nicht aber der Schräglaufwinkel beeinflußt werden kann. Bei einem Schlupf von 0 hat die Haftwertausnutzung in Fahrzeug-Querrichtung für jeden Schräglaufwinkel sein absolutes Maximum. Dieser Wert wird als Kurvenmaximalwert $K_i$, i=a,b,c,d,... der jeweiligen Kurve a,b,c,d,.. bezeichnet und ist gleichzeitig, wie aus Figur 2 ersichtlich ist, der Schnittpunkt mit der Ordinate. Aus diesem Grunde erfolgt eine weitere Begrenzung der Haftwertausnutzung in Fahrzeug-Querrichtung auf den Kurvenmaximalwert $K_i$.

Weiterhin ist im Reifendiagramm ersichtlich, daß insbesondere bei kleinen Schräglaufwinkeln eine Absenkung des Schlupfes nur eine unwesentliche Vergrößerung des Querausnutzungsgrades ergibt, da sich die Kurven hier in ihrem nahezu flach verlaufenden Bereich befinden. Es läßt sich somit für jede Kurve i ein jeweiliger Sollmaximalwert Ai festlegen, der den oberen Grenzwert des Sollwerts der Haftwertausnutzung in Querrichtung darstellt. Der untere Grenzwert Bc ergibt sich als Schnittpunkt jeder Kurve mit dem Kammschen Kreis KK, da bei weiter steigendem Schlupf s, d.h. fallendem Hy der instabile Bereich betreten wird.

Daher wird eine, mit sinkendem Schräglaufwinkel ansteigende, Verringerung des maximalen Soll-Querausnutzungsgrades betrieben. Würde dieses nicht erfolgen, so würde bei kleinen Schräglaufwinkeln die Soll-Längsausnutzung starken Schwankungen unterworfen sein, die zu einer unkomfortablen Fahrweise führen.

Hierzu wird rechnerisch eine Hilfsgröße nach der Formel

$$h = 0{,}85 + 3{\cdot}|\alpha|$$

gebildet ($\alpha$ in Radiant) und auf einen Maximalwert von 0,98 begrenzt. Anschließend wird die Soll-Querausnutzung auf das Produkt des Wertes, der bei dem aktuellen Schräglaufwinkel und einem Schlupf von 0 erreichbar ist und der Hilfsgröße h begrenzt.

Die bisherigen Begrenzungen begrenzten den Sollquerausnutzungswert jeweils nach oben hin.

Nach diesen Schritten ist gewährleistet, das der Soll-Betriebspunkt nicht im instabilen Bereich liegt, das dieser Punkt überhaupt einregelbar ist, und daß eine Einregelung nicht zu starken Schwankungen in Fahrzeuglängsrichtung erfolgt.

In einem nächsten Schritt wird um den Sollbetriebspunkt Si ein Toleranzband Ts gelegt. Befindet sich der Ist-Betriebspunkt innerhalb dieses Bandes, so erfolgt keine weitere Regelung, sondern das Stellglied wird auf diesem Wert gehalten. Liegt der Ist-Betriebspunkt links des Sollbetriebspunktes, so ist die Stabilisierung zu groß ausgefallen, es kann ein höherer Schlupf s, d.h. eine höhere Traktion zugelassen werden, und somit kann der Drosselklappenwinkel kann wieder vergrößert werden bzw. der Bremsdruck kann reduziert werden, insbesondere wenn der Ist-Betriebspunkt sich vom Sollbetriebspunkt wegbewegt. Das gleiche gilt äquivalent für den Bereich rechts des Sollpunktes.

Aus einem inversen Reifenkennfeld oder durch Interpolation im Reifenkennfeld kann nun aus dem gewünschten Querausnutzungsgrad und dem Schräglaufwinkel der zur gewünschten Situation passende, maximale Längsausnutzungsgrad und der Sollschlupf bestimmt werden.

Die Regelung erfolgt nun dadurch, daß die vom Fahrer vorgegebene Soll-Querbeschleunigung unter Berücksichtigung des instationären Übergangsverhaltens eingestellt wird - die Sollwertbildung erfolgt daher über das Giergeschwindigkeitstoleranzband -, und dabei eine dazu passende maximal mögliche Längskraft gelassen wird. Der optimale Betriebspunkt liegt bei der Gesamtausnutzung von 100 %. Da die Querdynamik oberste Priorität hat, ist für die Längsrichtung bei Vorgabe der Querrichtung folglich eine maximale Soll-Haftwertlängsausnutzung von $H_{xsoll} = \sqrt{1-(H_{ysoll})^2}$ möglich. Diese kann z. B. über den Drosselklappenwindel mittels eines Motorkennfeldes und eines simplen PID-Reglers eingeregelt werden. Der optimale Betriebspunkt liegt dann vor, wenn an beiden Vorderrädern die resultierenden Kraftvektoren richtungsparallel verlaufen. Diese Richtung soll identisch sein mit dem resultierenden Vektor, der aus dem Sollwert der Haftwertausnutzung ind Längsrichtung und dem Sollwert der Haftwertausnutzung in Querrichtung gebildet wird (ansonsten wäre ein Teil der Seitenkräfte beider Räder entgegengesetzt gerichtet und würde sich in der Summe aufheben). Hieraus folgt, daß beide Antriebsräder auf die oben berechnete Soll-Haftwertausnutzung in Längsrichtung geregelt werden sollten. Hierbei kann das unkritischere Rad mit der Drosselklappe geregelt werden, während der Rest am kritischeren Rad über die Radbremse dieses Rades geregelt wird. Alternativ können auch beide Räder nur mit der Bremse oder beide Räder nur mit der Drosselklappe geregelt werden. Die Regelung kann dabei durch eine PI- oder PID-Regelung erfolgen.

Durch die Regelung mittels der Bremse oder des Motorstellglieds wird dabei in dem Diagramm der Figur 2 auf der betreffenden Kennfeldkurve heruntergefahren, d. h. zu einem fallenden Wert $H_x$ und einem steigenden Wert $H_y$ hin.

Um die Antriebsschlupfregelung bei einer Geradeausfahrt nicht zu beeinträchtigen und zu verhindern, daß bei einer Geradeausfahrt bzw. einer Fahrt auf einer lediglich leicht gekrümmten Kurve nicht unnötigerweise eine Fahrstabilitätsregelung in Fahrzeug-Y-Richtung durchgeführt wird, kann zwischen einer Geradeausfahrt und einer Kurvenfahrt unterschieden werden, so daß bei einer Kurvenfahrt in der oben beschriebenen Weise eine maximal mögliche relative Haftwertausnutzung in Fahrzeug-Y-Richtung eingestellt wird, und bei einer Geradeausfahrt wie bekannt eine Schlupfregelung in Fahrzeug-Längsrichtung durchgeführt wird. Dabei kann z. B. eine Kurvenfahrt dann angenommen werden, wenn der Sollwert der Fahrzeug-Querbeschleunigung $a_{ysoll}$ kleiner als ein vorgegebener Wert $\chi$ ist, der beispielsweise im Bereich von 0,5 bis 1 m/s$^2$ liegt.

**Patentansprüche**

1. Verfahren zur Regelung des querdynamischen Verhaltens eines Kraftfahrzeugs, bei dem ein Istwert einer Querbeschleunigung ($a_{yist}$) des Fahrzeugs bestimmt wird,
   **dadurch gekennzeichnet, daß**

   aus einem Reifenmodell eine Haftwertausnutzung ($H_{yist}$) in Fahrzeug-Querrichtung und eine Haftwertausnutzung in Fahrzeug-Längsrichtung ($H_{xist}$) bestimmt werden, ein Sollwert der Querbeschleunigung ($a_{ysoll}$) bestimmt wird,
   ein Verhältnis vom Sollwert der Querbeschleunigung ($a_{ysoll}$) und dem Istwert der Querbeschleunigung ($a_{yist}$) als Korrekturfaktor (F) ermittelt wird,
   ein Sollwert der Haftwertausnutzung ($H_{ysoll}$) in Fahrzeug-Querrichtung ermittelt wird aus dem Korrekturfaktor und der bestimmten Haftwertausnutzung ($H_{yist}$) in Fahrzeug-Querrichtung,
   die Haftwertausnutzung ($H_x$) des Reifens in Fahrzeug-Längsrichtung geändert wird entsprechend dem Reifenmodell derartig, daß der Istwert der Haftwertausnutzung in Fahrzeug-Querrichtung auf den Sollwert der Haftwertausnutzung in Fahrzeug-Querrichtung geführt oder ihm angenähert wird.

2. Verfahren nach Anspruch 1, **dadurch gekennzeichnet, daß** die Raddrehzahlen von zwei angetriebenen Rädern und mindestens eines weiteren Rads des Kraftfahrzeugs gemessen werden, ein Schlupf (s) zumindest der angetriebenen Räder aus diesen Daten berechnet wird, und ein Schräglaufwinkel ($\alpha$) der angetriebenen Räder ermittelt wird, wobei Schlupf (s) und Schräglaufwinkel ($\alpha$) zur Bestimmung eines Reifenzustands in einem Reifenmodell verwendet werden.

3. Verfahren nach Anspruch 2, **dadurch gekennzeichnet, daß** der Schräglaufwinkel ($\alpha$) aus einer Querbeschleunigung ($a_{yist}$) des Fahrzeugs bestimmt wird.

4. Verfahren nach Anspruch 2, **dadurch gekennzeichnet, daß** der Schräglaufwinkel ($\alpha$) aus einer Giergeschwindigkeit des Fahrzeugs bestimmt wird.

5. Verfahren nach einem der Ansprüche 1 bis 4, **dadurch gekennzeichnet, daß** der Sollwert der Querbeschleunigung ($a_{ysoll}$) aus einem gemessenen Lenkradwinkel ($\delta_L$) und der Fahrgeschwindigkeit (v) des Fahrzeugs ermittelt wird.

6. Verfahren nach einem der Ansprüche 1 bis 5, **dadurch gekennzeichnet, daß** die Haftwertausnutzung in Fahrzeug-Querrichtung ($H_{yist}$) geändert wird durch Betätigung der Radbremsen.

7. Verfahren nach einem der Ansprüche 1 bis 5, **dadurch gekennzeichnet, daß** die Haftwertausnutzung in Fahrzeug-Querrichtung ($H_{yist}$) geändert wird durch Betätigung eines Leistungsstellglieds des Fahrzeugmotors, vorzugsweise einer Drosselklappe.

8. Verfahren nach einem der Ansprüche 1 bis 7, **dadurch gekennzeichnet, daß** die Regelung begrenzt wird derartig, daß der Sollwert der Haftwertausnutzung in Fahrzeug-Querrichtung ($H_{ysoll}$) auf einen maximalen Wert begrenzt wird.

9. Verfahren nach Anspruch 8, **dadurch gekennzeichnet, daß** der Sollwert der Haftwertausnutzung in Querrichtung ($H_{ysoll}$) auf einen maximalen Wert von 100 % begrenzt wird.

**10.** Verfahren nach Anspruch 8, **dadurch gekennzeichnet, daß** die maximale Haftwertausnutzung in Fahrzeug-Querrichtung begrenzt wird in Abhängigkeit von dem Schräglaufwinkel ($\alpha$) des Reifens.

**11.** Verfahren nach Anspruch 10, **dadurch gekennzeichnet, daß** der Sollwert der Haftwertausnutzung in Querrichtung ($H_{ysoll}$) auf einen Kurvenmaximalwert ($K_l$) begrenzt wird, der bei dem aktuellen Schräglaufwinkel ($\alpha$) und bei einem Schlupf (s) von 0 erreichbar ist.

**12.** Verfahren nach Anspruch 11, **dadurch gekennzeichnet, daß** der Sollwert der Haftwertausnutzung in Querrichtung ($H_{ysoll}$) auf einen Sollmaxiamalwert ($A_i$) begrenzt wird, der kleiner als der Kurvenmaximalwert ($K_l$) ist.

**13.** Verfahren nach Anspruch 12, **dadurch gekennzeichnet, daß** bei kleineren Schräglaufwinkeln ($\alpha$) die Differenz zwischen dem Kurvenmaximalwert ($K_i$) und dem Sollmaximalwert ($A_i$) größer ist.

**14.** Verfahren nach einem der Ansprüche 1 bis 13, **dadurch gekennzeichnet, daß** ein Soll-wert der Haftwertausnutzung in Fahrzeug-Querrichtung ($H_{ysoll}$) für einem jeweiligen Fahrzustand gewählt wird, der einen geringeren Schlupf (s) hat als ein Schlupf an einer Stabilitätsgrenze.

**15.** Verfahren nach einem der Ansprüche 1 bis 14, **dadurch gekennzeichnet, daß** keine Regelung vorgenommen wird, wenn der Abstand des Istwerts der Haftwertausnutzung in Fahrzeug-Querrichtung ($H_{yist}$) zu dem Sollwert der relativen Haftwertausnutzung in Fahrzeug-Querrichtung ($H_{ysoll}$) kleiner als ein vorgegebener Toleranzwert ($T_s$) ist.

**16.** Verfahren nach einem der Ansprüche 1 bis 15, **dadurch gekennzeichnet, daß** eine bekannte PID-Regelung vorgenommen wird.

**17.** Verfahren nach einem der Ansprüche 1 bis 16, **dadurch gekennzeichnet, daß** zwischen einer Geradeausfahrt und einer Kurvenfahrt unterschieden wird.

**18.** Verfahren nach Anspruch 17, **dadurch gekennzeichnet, daß** bei einer Kurvenfahrt derartig geregelt wird, daß eine maximal mögliche relative Haftwertausnutzung in Fahrzeug-Querrichtung ($H_y$) eingestellt wird, und bei Geradeausfahrt eine Schlupfregelung in Fahrzeug-Längsrichtung durchgeführt wird.

**19.** Verfahren nach Anspruch 18, **dadurch gekennzeichnet, daß** eine Kurvenfahrt dann angenommen wird, wenn der Sollwert der Fahrzeug-Querbeschleunigung ($a_{ysoll}$) kleiner als ein vorgegebener Wert ($\chi$) ist.

**20.** Verfahren nach Anspruch 19, **dadurch gekennzeichnet, daß** der vorgegebene Wert im Bereich von 0,5 bis 1 m/s$^2$ liegt.

**21.** Vorrichtung zur Regelung des querdynamischen Verhaltens eines Kraftfahrzeugs zum Durchführen eines Verfahrens nach einem der Ansprüche 1 bis 20.

**22.** Vorrichtung nach Anspruch 21 zum Durchführen eines Verfahrens einem der Ansprüche 2 bis 20, **gekennzeichnet durch** Raddrehzahlsensoren zum Messen der Raddrehzahlen der Räder.

**23.** Vorrichtung nach Anspruch 21 oder 22, zum Durchführen eines Verfahrens nach einem der Ansprüche 3 bis 20, **gekennzeichnet durch** einen Querbeschleunigungssensor zum Messen der Querbeschleunigung ($a_{yist}$) des Fahrzeugs.

## Claims

**1.** Method for controlling the transverse dynamic response of a motor vehicle, in the case of which an actual value of a transverse acceleration ($a_{yist}$) of the vehicle is determined, **characterized in that** an adhesion utilization ($H_{yist}$) in the vehicle transverse direction, and an adhesion utilization ($H_{xist}$) in the vehicle longitudinal direction determined from a tyre model, a desired value of the transverse acceleration ($a_{ysoll}$) is determined, a ratio of the desired value of the transverse acceleration ($a_{ysoll}$) and the actual value of the transverse acceleration ($a_{yist}$) is determined as correction factor (F), a desired value of the adhesion utilization ($H_{ysoll}$) in the vehicle transverse direction is determined from the correction factor and the determined adhesion utilization ($H_{yist}$) in the vehicle transverse direction,

8

and the adhesion utilization ($H_x$) of the tyre in the vehicle longitudinal direction is modified in accordance with the tyre model in such a way that the actual value of the adhesion utilization in the vehicle transverse direction has led to the desired value of the adhesion utilization in the vehicle transverse direction, or is approximated to it.

2. Method according to Claim 1, **characterized in that** the wheel speeds of two driven wheels and at least one further wheel of the motor vehicle are measured, a slip (s) of at least the driven wheels is calculated from these data, and a slip angle ($\alpha$) of the driven wheels is determined, slip (s) and slip angle ($\alpha$) being used to determine a tyre state in a tyre model.

3. Method according to Claim 2, **characterized in that** the slip angle ($\alpha$) is determined from a transverse acceleration ($a_{yist}$) of the vehicle.

4. Method according to Claim 2, **characterized in that** the slip angle ($\alpha$) is determined from a yaw velocity of the vehicle.

5. Method according to one of Claims 1 to 4, **characterized in that** the desired value of the transverse acceleration ($a_{ysoll}$) is determined from a measured steering-wheel angle ($\delta_L$) and the vehicle speed (v).

6. Method according to one of Claims 1 to 5, **characterized in that** the adhesion utilization in the vehicle transverse direction ($H_{yist}$) is modified by actuating the wheel brakes.

7. Method according to one of Claims 1 to 5, **characterized in that** the adhesion utilization in the vehicle transverse direction ($H_{yist}$) is modified by actuating a power actuator of the vehicle engine, preferably a throttle valve.

8. Method according to one of Claims 1 to 7, **characterized in that** the control is limited in such a way that the desired value of the adhesion utilization in the vehicle transverse direction ($H_{ysoll}$) is limited to a maximum value.

9. Method according to Claim 8, **characterized in that** the desired value of the adhesion utilization in the transverse direction ($H_{ysoll}$) is limited to a maximum value of 100%.

10. Method according to Claim 8, **characterized in that** the maximum adhesion utilization in the vehicle transverse direction is limited as a function of the slip angle ($\alpha$) of the tyre.

11. Method according to Claim 10, **characterized in that** the desired value of the adhesion utilization in the transverse direction ($H_{ysoll}$) is limited to a curve maximum value ($K_i$) which can be achieved in the case of the current slip angle ($\alpha$) and of a slip (s) of 0.

12. Method according to Claim 11, **characterized in that** the desired value of the adhesion utilization in the transverse direction ($H_{ysoll}$) is limited to a desired maximum value ($A_i$) which is smaller than the curve maximum value ($K_i$).

13. Method according to Claim 12, **characterized in that** in the case of a smaller slip angle ($\alpha$) the difference between the curve maximum value ($K_i$) and the desired maximum value ($A_i$) is greater.

14. Method according to one of Claims 1 to 13, **characterized in that** a desired value of the adhesion utilization in the vehicle transverse direction ($H_{ysoll}$) is selected for a respective driving state which has a smaller slip (s) than a slip at a stability limit.

15. Method according to one of Claims 1 to 14, **characterized in that** no control is undertaken when the distance of the actual value of the adhesion utilization in the vehicle transverse direction ($H_{yist}$) from the desired value of the relative adhesive utilization in the vehicle transverse direction ($H_{ysoll}$) is smaller than a prescribed tolerance value ($T_s$).

16. Method according to one of Claims 1 to 15, **characterized in that** a known PID control is undertaken.

17. Method according to one of Claims 1 to 16, **characterized in that** a distinction is made between straight-ahead driving and cornering.

18. Method according to Claim 17, **characterized in that** in the case of cornering, control is carried out in such a way that a maximum possible relative adhesion utilization in the vehicle transverse direction ($H_y$) is set, and slip control in the vehicle longitudinal direction is carried out in the case of straight-ahead driving.

19. Method according to Claim 18, **characterized in that** cornering is assumed whenever the desired value of the vehicle transverse acceleration ($a_{ysoll}$) is smaller than a prescribed value ($\chi$).

20. Method according to Claim 19, **characterized in that** the prescribed value is in the range from 0.5 to 1 m/s$^2$.

21. Device for controlling the transverse dynamic response of a motor vehicle for the purpose of carrying out a method according to one of Claims 1 to 20.

22. Device according to Claim 21 for carrying out a method according to one of Claims 2 to 20, **characterized by** wheel speed sensors for measuring the wheel speeds.

23. Device according to Claim 21 and 22 for carrying out a method according to one of Claims 3 to 20, **characterized by** a transverse acceleration sensor for measuring the transverse acceleration ($a_{yist}$) of the vehicle.

**Revendications**

1. Procédé pour régler le comportement dynamique transversal d'un véhicule, avec lequel une valeur réelle d'une accélération transversale ($a_{yist}$) du véhicule est déterminée, **caractérisé en ce que**

   une utilisation de l'indice d'adhérence ($H_{yist}$) dans le sens transversal du véhicule et une utilisation de l'indice d'adhérence dans le sens longitudinal du véhicule ($H_{xist}$) sont déterminées à partir d'un modèle de pneumatique,
   une valeur de consigne de l'accélération transversale ($a_{ysoll}$) est déterminée,
   un rapport entre la valeur de consigne de l'accélération transversale ($a_{ysoll}$) et la valeur réelle de l'accélération transversale ($a_{yist}$) est déterminée comme facteur de correction (F),
   une valeur de consigne de l'utilisation de l'indice d'adhérence ($H_{ysoll}$) dans le sens transversal du véhicule est déterminée à partir du facteur de correction et de l'utilisation déterminée de l'indice d'adhérence ($H_{yist}$) dans le sens transversal du véhicule,
   l'utilisation de l'indice d'adhérence ($H_x$) des pneumatiques dans le sens longitudinal du véhicule est modifiée en fonction du modèle de pneumatique de manière à ce que la valeur réelle de l'utilisation de l'indice d'adhérence dans le sens consigne de l'utilisation de l'indice d'adhérence dans le sens transversal du véhicule ou s'en approche.

2. Procédé selon la revendication 1, **caractérisé en ce que** les vitesses de rotation de deux roues entraînées et d'au moins une roue supplémentaire du véhicule sont mesurées, un glissement (s) au moins des roues entraînées est calculé à partir de ces données et une inclinaison de l'axe-pivot ($\alpha$) des roues entraînées est déterminé, le glissement (s) et l'inclinaison de l'axe-pivot ($\alpha$) étant utilisés pour déterminer un état des pneumatiques dans un modèle de pneumatique.

3. Procédé selon la revendication 2, **caractérisé en ce que** l'inclinaison de l'axe-pivot ($\alpha$) est déterminée à partir d'une accélération transversale ($a_{yist}$) du véhicule.

4. Procédé selon la revendication 2, **caractérisé en ce que** l'inclinaison de l'axe-pivot ($\alpha$) est déterminée à partir d'une vitesse de lacet du véhicule.

5. Procédé selon l'une des revendications 1 à 4, **caractérisé en ce que** la valeur de consigne de l'accélération transversale ($a_{ysoll}$) est déterminée à partir d'un angle mesuré des roues de direction ($\delta_L$) et de la vitesse de déplacement (v) du véhicule.

6. Procédé selon l'une des revendications 1 à 5, **caractérisé en ce que** l'utilisation de l'indice d'adhérence dans le sens transversal du véhicule ($H_{yist}$) est modifiée en actionnant les freins des roues.

7. Procédé selon l'une des revendications 1 à 5, **caractérisé en ce que** l'utilisation de l'indice d'adhérence dans le sens transversal du véhicule ($H_{yist}$) est modifiée en actionnant un élément de réglage de la puissance du moteur du véhicule, de préférence un clapet obturateur.

**8.** Procédé selon l'une des revendications 1 à 7, **caractérisé en ce que** la valeur de consigne de l'utilisation de l'indice d'adhérence dans le sens transversal du véhicule ($H_{ysoll}$) est limitée à une valeur maximale.

**9.** Procédé selon la revendication 8, **caractérisé en ce que** la valeur de consigne de l'utilisation de l'indice d'adhérence dans le sens transversal ($H_{ysoll}$) est limitée à une valeur maximale de 100 %.

**10.** Procédé selon la revendication 8, **caractérisé en ce que** l'utilisation maximale de l'indice d'adhérence dans le sens transversal du véhicule est limitée en fonction de l'inclinaison de l'axe-pivot ($\alpha$) des pneumatiques.

**11.** Procédé selon la revendication 10, **caractérisé en ce que** la valeur de consigne de l'utilisation de l'indice d'adhérence dans le sens transversal ($H_{ysoll}$) est limitée à une valeur maximale du virage ($K_i$) qui peut être atteinte avec l'inclinaison de l'axe-pivot ($\alpha$) actuelle et avec un glissement (s) de 0.

**12.** Procédé selon la revendication 11, **caractérisé en ce que** la valeur de consigne de l'utilisation de l'indice d'adhérence dans le sens transversal ($H_{ysoll}$) est limitée à une valeur maximale de consigne ($A_i$) qui est inférieure à la valeur maximale du virage ($K_i$).

**13.** Procédé selon la revendication 12, **caractérisé en ce que** dans le cas des petites inclinaisons de l'axe-pivot ($\alpha$), la différence entre la valeur maximale du virage ($K_i$) et la valeur maximale de consigne ($A_i$) est plus grande.

**14.** Procédé selon l'une des revendications 1 à 13, **caractérisé en ce qu'**une valeur de consigne de l'utilisation de l'indice d'adhérence dans le sens transversal du véhicule ($H_{ysoll}$) choisie pour une situation de conduite donnée est celle qui présente un glissement (s) inférieur à un glissement à une limite de stabilité.

**15.** Procédé selon l'une des revendications 1 à 14, **caractérisé en ce qu'**aucune régulation n'est effectuée lorsque l'écart entre la valeur réelle de l'utilisation de l'indice d'adhérence dans le sens transversal du véhicule ($H_{yist}$) et la valeur de consigne de l'utilisation relative de l'indice d'adhérence dans le sens transversal du véhicule ($H_{ysoll}$) est inférieur à une valeur de tolérance ($T_s$) donnée.

**16.** Procédé selon l'une des revendications 1 à 15, **caractérisé en ce que** la régulation effectuée est une régulation PID connue.

**17.** Procédé selon l'une des revendications 1 à 16, **caractérisé en ce que** la différence est faite entre un déplacement en ligne droite et un déplacement en virage.

**18.** Procédé selon la revendication 17, **caractérisé en ce que** dans le cas d'un déplacement en virage, la régulation est effectuée de manière à fixer une utilisation maximale possible de l'indice d'adhérence dans le sens transversal du véhicule ($H_y$) et, dans le cas d'un déplacement en ligne droite, on effectue une régulation du glissement dans le sens longitudinal du véhicule.

**19.** Procédé selon la revendication 18, **caractérisé en ce qu'**un déplacement en virage est supposé lorsque la valeur de consigne de l'accélération transversale du véhicule ($a_{ysoll}$) est inférieure à une valeur prédéfinie ($\chi$).

**20.** Procédé selon la revendication 19, **caractérisé en ce que** la valeur prédéfinie est comprise entre 0,5 et 1 m/s$^2$.

**21.** Dispositif pour régler le comportement dynamique transversal d'un véhicule en vue de réaliser un procédé selon l'une des revendications 1 à 20.

**22.** Dispositif selon la revendication 21 en vue de réaliser un procédé selon l'une des revendications 2 à 20, **caractérisé par** des capteurs de vitesse de rotation des roues pour mesurer les vitesses de rotation des roues.

**23.** Dispositif selon la revendication 21 ou 22 en vue de réaliser un procédé selon l'une des revendications 3 à 20, **caractérisé par** un capteur d'accélération transversale pour mesurer l'accélération transversale ($a_{yist}$) du véhicule.

FIG. 1

FIG. 2